(19) **Europäisches Patentamt**
**European Patent Office**
**Office européen des brevets**

(11) **EP 3 839 447 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **20210506.0**

(22) Anmeldetag: **30.11.2020**

(51) Internationale Patentklassifikation (IPC):
**G01G 19/02** (2006.01) **G01G 3/13** (2006.01)

(52) Gemeinsame Patentklassifikation (CPC):
**G01G 19/024; G01G 3/13**

(54) **WIM-KRAFTAUFNEHMER UND GEHÄUSEPROFIL FÜR SOLCH EINEN WIM-KRAFTAUFNEHMER**

WIM FORCE TRANSDUCER AND HOUSING PROFILE FOR SUCH A WIM FORCE TRANSDUCER

CAPTEUR DE FORCE WIM ET PROFILÉ DE BOÎTIER POUR UN TEL CAPTEUR DE FORCE WIM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2019 EP 19216564**

(43) Veröffentlichungstag der Anmeldung:
**23.06.2021 Patentblatt 2021/25**

(73) Patentinhaber: **Kistler Holding AG**
**8408 Winterthur (CH)**

(72) Erfinder: **Pfluger, Kim**
**8404 Winterthur (CH)**

(56) Entgegenhaltungen:
**WO-A1-87/05773 WO-A1-2013/071452**
**CN-B- 102 928 005**

## Beschreibung

### Technisches Gebiet

Die Erfindung betrifft einen WIM-Kraftaufnehmer nach dem Oberbegriff des unabhängigen Anspruchs. Die Erfindung betrifft auch Gehäuseprofil für solch einen WIM-Kraftaufnehmer.

### Stand der Technik

Kraftaufnehmer sind allgemein bekannt. Eine zu messende Kraft wirkt auf den Kraftaufnehmer und unter der Wirkung der Kraft erzeugt der Kraftaufnehmer ein Messsignal.

Im Speziellen sind Kraftaufnehmer als Weigh-In-Motion (WIM) Kraftaufnehmer bekannt. Ein solcher WIM-Kraftaufnehmer ist in einer Fahrbahn eingebaut und misst eine Reaktionskraft von einem auf der Fahrbahn fahrenden Fahrzeug, wenn dieses über den WIM-Kraftaufnehmer fährt. Die Anmelderin ist Marktführerin für WIM-Kraftaufnehmer, bei denen eine piezoelektrische Messanordnung unter der Wirkung der Reaktionskraft Messsignale in Form von elektrischen Polarisationsladungen erzeugen. Die elektrischen Polarisationsladungen werden von Elektroden abgegriffen. Die Anzahl der elektrischen Polarisationsladungen ist proportional zur Grösse der Reaktionskraft. Die Messung der Reaktionskraft ist dynamisch, d.h. sie erfolgt bei einer Geschwindigkeit des Fahrzeugs ab 2km/h bis zu 200km/h und mehr. Aus den Messsignalen lassen sich vielfältige Verkehrsinformationen wie eine Achslast, ein Gesamtgewicht, Achsabstände, eine Fahrzeuglänge, die Geschwindigkeit des Fahrzeugs, usw. ermitteln.

In der Schrift EP0654654A1 offenbart die Anmelderin einen solchen WIM-Kraftaufnehmer. Der WIM-Kraftaufnehmer weist ein Gehäuseprofil mit einem Krafteinleitflansch, einem Rohrteil und einem Kraftverankerungsflansch auf. Eine piezoelektrische Messanordnung ist in einem Hohlraum im Rohrteil angeordnet. Die Fahrbahn verläuft entlang einer horizontalen Achse. Der Krafteinleitflansch liegt in einer Distanz von einigen cm unterhalb der Fahrbahn. Die zu messende Reaktionskraft wird entlang einer vertikalen Achse über das Gehäuseprofil auf die piezoelektrische Messanordnung geleitet. Die vertikale Achse wird auch Krafteinleitachse genannt. Mit dem Kraftverankerungsflansch ist der WIM-Kraftaufnehmer in einem Untergrund der Fahrbahn mechanisch dauerhaft befestigt.

Das Rohrteil weist Wandungen auf. Die Wandungen schützen die piezoelektrische Messanordnung vor schädlichen Umwelteinflüssen wie Verunreinigungen, Staub, Feuchtigkeit.

Das Rohrteil weist zwei Halterungen auf. Die Halterungen sind einstückig mit den Wandungen. Die Halterungen begrenzen im Inneren des Rohrteils einen Hohlraum für die piezoelektrische Messanordnung.

Und die Halterungen spannen die piezoelektrische Messanordnung im Hohlraum mechanisch vor. Durch die mechanische Vorspannung liegen Oberflächen von piezoelektrischen Messelemente und Elektroden der piezoelektrischen Messanordnung kraftschlüssig aufeinander auf, so dass keine elektrisch nichtkontaktierten Bereiche mit unvollständigem Ladungsabgriff auftreten und so dass sich Rauheiten und Unebenheiten dieser Oberflächen schliessen, was zu einer hohen Messwiederholbarkeit und hohen Linearität des WIM-Kraftaufnehmers führt. Die Messwiederholbarkeit gibt an, mit welcher Genauigkeit eine Messung unter identischen Bedingungen wiederholbar ist. Die Linearität besagt, wie konstant die Anzahl der elektrischen Polarisationsladungen mit steigender Reaktionskraft wächst.

Um die mechanische Vorspannung zu erzeugen, wird eine Grösse der piezoelektrische Messanordnung in Richtung der Krafteinleitachse mit Übermass zu einer Grösse des Hohlraums gefertigt. Zur Montage der piezoelektrischen Messanordnung im Hohlraum wird das Rohrteil mittels einer horizontal wirkenden Montagekraft elastisch in Richtung der Krafteinleitachse aufgeweitet. Die horizontale Achse wird auch Montagekraftachse genannt. Sobald die piezoelektrische Messanordnung im Hohlraum montiert ist, wird die Montagekraft gelöst. Die elastische Aufweitung des Rohrteils entlang der Krafteinleitachse wird damit teilweise rückgängig gemacht und aufgrund des Übermasses wirkt nun die mechanische Vorspannung in Richtung der Krafteinleitachse.

Gemäss der Lehre der Schrift EP0654654A1 ist das Rohrteil in einer in einer von der Krafteinleitachse und der Montagekraftachse aufgespannten Querschnittsebene kreisförmig und die Wandungen haben eine einheitliche Wandstärke.

Es hat sich herausgestellt, dass die Grösse des Hohlraums zwischen den Halterungen mit hoher Genauigkeit gefertigt werden muss. Bei einem zu grossen Übermass muss zur Aufweitung des Rohrteils eine grössere Montagekraft angelegt werden, was die Gefahr birgt, dass sich das Rohrteil bei der Montage teilweise plastisch aufweitet. Ein teilweise plastisch aufgeweitetes Rohrteil nimmt nach dem Lösen der Montagekraft eine nicht vorherbestimmbare Form ein, so dass eine zu geringe mechanische Vorspannung wirkt. Und bei einem zu kleinen Übermass ist die nach dem Lösen der Montagekraft wirkende mechanische Vorspannung zu gering.

Diesbezüglich lehrt die Schrift CN102928005A1 einen WIM-Kraftaufnehmer ein Rohrteil mit Wandungen, deren Wandstärke mit steigender Entfernung zu den Halterungen konstant zunimmt. An zwei Montagestellen, wo die Montagekraft entlang der Montagekraftachse auf die Wandungen wirkt, weisen die Wandungen eine grösste Wandstärke auf. Von den Halterungen zu den Montagestellen nimmt die Wandstärke kosinusförmig zu. Dies führt zu einem massiven, rautenförmigen Rohrteil.

Für eine möglichst hohe Empfindlichkeit des WIM-Kraftaufnehmers ist die piezoelektrische Messanordnung im Krafthauptschluss anzuordnen. Die Empfindlichkeit ist ein Verhältnis der Anzahl der elektrischen Polarisationsladungen und der Grösse der Reaktionskraft. Im Krafthauptschluss wirkt ein möglichst grosser Anteil der Reaktionskraft über das Gehäuseprofil auf die piezoelektrische Messanordnung. Das massive, rautenförmige Rohrteil der Lehre der Schrift CN102928005A1 mindert die Empfindlichkeit des WIM-Kraftaufnehmers.

Die Schrift WO87/05773A1 betrifft ein Sonar mit einem Stapel aus piezoelektrischen Elementen, der in einer flexiblen Hülle aus glasfaserverstärktem Polyester angeordnet ist. Die Hülle ist von elliptischem Querschnitt mit einer grossen Halbachse und einer kleinen Halbachse. Der Stapel ist auf der grossen Halbachse in der Hülle angeordnet. Unter der Wirkung einer elektrischen Wechselspannung vibriert der Stapel entlang der grossen Halbachse. Die Vibration überträgt sich auf die Hülle und führt zu einer verstärkten Resonanzvibration entlang der kleinen Halbachse. Die Schrift WO87/05773A1 beschreibt auch ein Montageverfahren des Sonars. Demnach werden um den Stapel Formteile angefügt, sodass eine Struktur mit elliptischem Querschnitt entsteht. Um diese Struktur wird nun die Hülle gewickelt. Die Hülle gibt dem Stapel eine mechanische Vorspannung.

Eine erste Aufgabe der vorliegenden Erfindung ist es, einen WIM-Kraftaufnehmer aufzuzeigen, welcher Messsignale von hoher Messwiederholbarkeit und hoher Linearität liefert. Eine zweite Aufgabe der Erfindung besteht darin, einen sehr empfindlichen WIM-Kraftaufnehmer aufzuzeigen. Und als dritte Aufgabe soll ein Gehäuseprofil für solch einen WIM-Kraftaufnehmer kostengünstig fertigbar sein.

## Darstellung der Erfindung

Zumindest eine dieser Aufgaben wird durch die Merkmale des unabhängigen Anspruchs gelöst.

Die Erfindung betrifft einen WIM-Kraftaufnehmer, mit einem Gehäuseprofil und einer piezoelektrischen Messanordnung; welche piezoelektrische Messanordnung unter der Wirkung einer zu messenden Reaktionskraft elektrische Polarisationsladungen erzeugt; welches Gehäuseprofil ein Rohrteil und einen Hohlraum im Inneren des Rohrteils aufweist; welche Reaktionskraft über das Gehäuseprofil entlang einer Krafteinleitachse auf die piezoelektrische Messanordnung wirkt; welche piezoelektrische Messanordnung entlang der Krafteinleitachse unter mechanischer Vorspannung im Hohlraum montiert ist; wobei an das Rohrteil eine entlang einer Montagekraftachse wirkende Montagekraft anlegbar ist, welches Rohrteil zur Montage der piezoelektrischen Messanordnung im Hohlraum durch eine angelegte Montagekraft entlang der Krafteinleitachse aufweitbar ist; wobei das Rohrteil in einer von der Krafteinleitachse und der Montagekraftachse aufgespannten Querschnittsebene elliptisch geformt ist, mit einer grossen Halbachse entlang der Montagekraftachse und mit einer kleinen Halbachse entlang der Krafteinleitachse.

Mit der vorliegenden Erfindung ist das Rohrteil des WIM-Kraftaufnehmers in der Querschnittsebene nicht mehr kreisförmig, wie in der Schrift EP0654654A1 gelehrt. Vielmehr ist das erfinderische Rohrteil in der Querschnittsebene elliptisch geformt.

Die Anmelderin hat erkannt, dass für ein in der Querschnittsebene elliptisches Rohrteil mit einer grösseren Ausdehnung entlang der Montagekraftachse als entlang der Krafteinleitachse, eine gleich grosse Montagekraft wie beim kreisförmigen Rohrteil der Schrift EP0654654A1, zu einer grösseren Aufweitung entlang der Krafteinleitachse führt, ohne dass sich dabei das Rohrteil plastisch aufweitet.

Die gleich grosse Montagekraft erzeugt vergleichsweise eine weitgehend 5% grössere Aufweitung. Dadurch lassen sich das erfinderische Rohrteil und die piezoelektrische Messanordnung mit weniger strengen Fertigungstoleranzen fertigen, was kostengünstig ist.

In einer vorteilhaften Ausführungsform weist das Rohrteil des WIM-Kraftaufnehmers eine äussere Oberfläche und einen Mittelpunkt auf, welche äussere Oberfläche elliptisch vom Mittelpunkt weggeformt ist; und wobei das Rohrteil mindestens einen Montagebereich und eine innere Oberfläche aufweist, welcher Montagebereich auf der Montagekraftachse liegt; und dass die innere Oberfläche im Montagebereich konkav zum Mittelpunkt hingeformt ist.

Das Rohrteil ist im Montagebereich, wo die Montagekraft anlegbar ist, durch eine spezielle Formgebung gezielt lokal mechanisch verstärkt. Eine äussere Oberflächen ist elliptisch vom Mittelpunkt weggeformt, eine innere Oberfläche ist konvex zum Mittelpunkt hingeformt. Denn die Montagekraft greift lokal im Montagebereich an und verformt den Montagebereich. Auf der äusseren Oberfläche führt die Montagekraft zu Druckkräften und auf der inneren Oberfläche führt die Montagekraft zu Zugkräften. Die Druckkräfte wirken auf der äusseren Oberfläche tangential zum Montagebereich hin. Die Zugkräfte wirken auf der inneren Oberfläche tangential vom Montagebereich weg. Durch die elliptische Formgebung der äusseren Oberfläche und die konkave Formgebung der inneren Oberfläche wird eine plastische Deformation des Montagebereichs unter der Wirkung der Druckkräfte und Zugkräfte gezielt vermieden.

Aufgrund des verstärkten Montagebereichs erzeugt eine gleich grosse Montagekraft wie beim Rohrteil der Schrift EP0654654A1 vergleichsweise einen weitgehend 25% kleineren Anteil an plastischer Aufweitung des Rohrteils. Dies hat zur Folge, dass sich durch den verstärkten Montagebereich nach dem Lösen der Montagekraft die gewünschte Grösse der mechanischen Vorspannung mit grösserer Wahrscheinlichkeit einstellt, was wiederum zu einer höheren Messwiederholbarkeit und höheren Linearität des Kraftaufnehmers führt.

In einer weiteren vorteilhaften Ausführungsform erstreckt sich der Montagebereich des Rohrteils des WIM-Kraftaufnehmers auf der inneren Oberfläche zwischen zwei Wendepunkten; und der Montagebereich weist auf der inneren Oberfläche einen konstanten konkaven Verstärkungsradius auf.

Dies hat den Vorteil, dass eine axiale Ausdehnung des Montagebereichs entlang der Montagekraftachse durch eine Grösse des Verstärkungsradius genau einstellbar ist. Die Grösse des verstärkten Montagebereichs wird somit gezielt auf die Grösse der Montagekraft eingestellt. Die Grösse des verstärkten Montagebereichs wird so klein wie nötig gehalten, damit ein möglichst kleiner Anteil der zu messenden Reaktionskraft über den verstärkten Montagebereich fliesst und ein möglichst grosser Anteil der Reaktionskraft auf die piezoelektrische Messanordnung wirkt, was eine möglichst hohe Empfindlichkeit des WIM-Kraftaufnehmers zur Folge hat.

In einer weiteren vorteilhaften Ausführungsform erstreckt sich der Montagebereich des Rohrteils des WIM-Kraftaufnehmers entlang einer radialen Achse über einen Montagebereichswinkel; oder der Montagebereich des Rohrteils des WIM-Kraftaufnehmers erstreckt sich entlang der Krafteinleitungsachse über eine Verstärkungshöhe.

Dies hat den Vorteil, dass eine radiale Ausdehnung eines Montagebereichs entlang der radialen Achse durch eine Grösse des Montagebereichswinkels genau einstellbar ist, und dass eine axiale Ausdehnung des Montagebereichs entlang der Krafteinleitungsachse durch eine Grösse der Verstärkungshöhe genau einstellbar ist. Auch dadurch wird die Grösse des verstärkten Montagebereichs so klein wie nötig gehalten, ein möglichst kleiner Anteil der zu messenden Reaktionskraft fliesst über den verstärkten Montagebereich und ein möglichst grosser Anteil der Reaktionskraft wirkt auf die piezoelektrische Messanordnung. All das hat eine möglichst hohe Empfindlichkeit des WIM-Kraftaufnehmers zur Folge.

In einer weiteren vorteilhaften Ausführungsform weist das Rohrteil des WIM-Kraftaufnehmers mehrere Wandungsbereiche auf; welche äussere Oberfläche in den Wandungsbereichen elliptisch vom Mittelpunkt weggeformt ist, welche innere Oberfläche in den Wandungsbereichen elliptisch vom Mittelpunkt weggeformt ist; und dass die Wandungsbereiche eine Wandstärke haben, welche Wandstärke weitgehend konstant ist.

Im Unterschied zur Lehre der Schrift CN102928005A1 weist das Rohrteil des WIM-Kraftaufnehmers mehrere Wandungsbereiche mit konstanter Wandstärke auf. Diese Wandstärke wird so gering wie nötig gehalten, damit ein möglichst kleiner Anteil der zu messenden Reaktionskraft über die Wandungsbereiche fliesst und ein möglichst grosser Anteil der zu messenden Reaktionskraft auf die piezoelektrische Messanordnung gelangt, was eine möglichst hohe Empfindlichkeit des WIM-Kraftaufnehmers zur Folge hat.

Die Erfindung betrifft auch ein Gehäuseprofil für solch einen WIM-Kraftaufnehmer.

Weitere vorteilhafte Lösungen der Aufgaben erfolgen mit den Merkmalen der weiteren abhängigen Ansprüche.

**Kurze Beschreibung der Zeichnungen**

Im Folgenden wird die Erfindung beispielhaft unter Beizug der Figuren näher erklärt. Es zeigen

Fig. 1 einen Querschnitt durch einen Teil einer Ausführungsform eines Gehäuseprofils des WIM-Kraftaufnehmers;

Fig. 2 einen Querschnitt durch einen Teil einer Ausführungsform einer piezoelektrischen Messanordnung des WIM-Kraftaufnehmers;

Fig. 3 einen Querschnitt durch den Teil des mit einer Montagekraft aufgeweiteten Gehäuseprofils des WIM-Kraftaufnehmers gemäss Fig. 1;

Fig. 4 einen Querschnitt des Teils der piezoelektrischen Messanordnung des Kraftaufnehmers gemäss Fig. 2 nach der Montage im aufgeweiteten Gehäuseprofil des WIM-Kraftaufnehmers gemäss Fig. 3;

Fig. 5 einen Querschnitt durch den Teil des WIM-Kraftaufnehmers gemäss Fig. 4 nach dem Lösen der Montagekraft; und

Fig. 6 eine Darstellung der Komprimierung und Aufweitung eines modellierten Rohrteils.

Grundsätzlich sind in den Zeichnungen gleiche Teile mit gleichen Bezugszeichen versehen.

**Wege zur Ausführung der Erfindung**

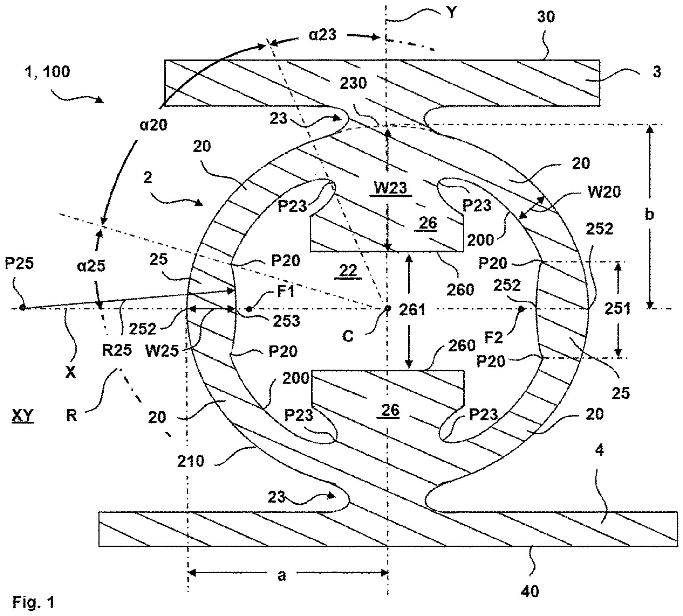

Fig. 1 zeigt einen Querschnitt durch einen Teil einer Ausführungsform eines Gehäuseprofils 1 des erfindungsgemässen WIM-Kraftaufnehmers 100. Ein solcher WIM-Kraftaufnehmer 100 ist in einer Fahrbahn eingebaut und misst als Kraft eine Reaktionskraft von einem auf der Fahrbahn fahrenden Fahrzeug, wenn dieses über den WIM-Kraftaufnehmer fährt. Bei Kenntnis der vorliegenden Erfindung kann der Fachmann die Erfindung aber auch in anderen Kraftaufnehmer mit einem Gehäuseprofil realisieren.

In Fig. 1 sind eine horizontale Achse oder Montagekraftachse X und eine vertikale Achse oder Krafteinleitachse Y eingezeichnet. Die beiden Achsen schneiden sich in einem Mittelpunkt C des Kraftaufnehmers 100. Der Querschnitt liegt in einer von der Montagekraftachse X und der Krafteinleitachse Y aufgespannten Querschnittsebene XY. Eine Längsachse ist nicht eingezeichnet. Die Montagekraftachse X, die Krafteinleitachse Y und die Längsachse stehen senkrecht aufeinander. Die Fahrbahn verläuft parallel zur Montagekraftachse X.

Das Gehäuseprofil 1 ist aus mechanisch beständigem Material wie Eisen, Eisenlegierungen, Stahl, Aluminium, usw. Entlang der Montagekraftachse X weist das Gehäuseprofil 1 eine Breite von beispielsweise 35mm auf. Entlang der Krafteinleitachse Y weist das Gehäuseprofil 1 eine Höhe von beispielsweise 35mm auf. Entlang der Längsachse kann das Gehäuseprofil 1 kann eine Länge von 1000mm oder 2000mm haben. Vorzugsweise ist das Gehäuseprofil 1 aus Aluminium gefertigt. Vorzugsweise ist das Gehäuseprofil 1 einstückig gefertigt. Ein einstückiges Gehäuseprofil 1 aus Aluminium ist kostengünstig zu fertigen und kann aufgrund des im Vergleich zu Eisen, Eisenlegierungen, Stahl, usw. geringen Gewichts einfach transportiert und einfach in eine Fahrbahn eingebaut werden.

Das Gehäuseprofil 1 weist einen Krafteinleitflansch 3, ein Rohrteil 2 und einen Kraftverankerungsflansch 4 auf. Bezüglich der Krafteinleitachse Y ist das Rohrteil 2 zwischen dem Krafteinleitflansch 3 und dem Kraftverankerungsflansch 4 angeordnet. Eine Krafteinleitfläche 30 des Krafteinleitflansches 3 liegt parallel zur Montagekraftachse X in einer Distanz von einigen cm unterhalb der Fahrbahn. Eine zu messende Reaktionskraft wird entlang der Krafteinleitachse Y von der Krafteinleitfläche 30 vom Krafteinleitflansch 3 in das Rohrteil 2 geleitet. Mit dem Kraftverankerungsflansch 4 ist der Kraftaufnehmer 100 in einem Untergrund der Fahrbahn mechanisch dauerhaft befestigt. Eine Kraftverankerungsfläche 40 des Kraftverankerungsflansches 4 liegt parallel zur Montagekraftachse X.

Das Rohrteil 2 ist in seinem Inneren, im Bereich des Mittelpunktes C hohl. Im Querschnitt umschliesst das Rohrteil 2 einen Hohlraum 22 entlang einer radialen Achse R vollständig um 360°. Die radiale Achse R verläuft in der Querschnittsebene XY. Das Rohrteil 2 weist eine innere Oberfläche 200 auf, welche innere Oberfläche 200 zum Mittelpunkt C hingerichtet ist und welche innere Oberfläche 200 den Hohlraum 22 begrenzt. Das Rohrteil 2 weist eine äussere Oberfläche 210 auf, welche äussere Oberfläche 210 vom Mittelpunkt C weggerichtet ist und welche äussere Oberfläche 210 das Rohrteil 2 nach aussen hin begrenzt.

Die äussere Oberfläche 210 ist elliptisch vom Mittelpunkt C weggeformt. Die äussere Oberfläche 210 weist eine grosse Halbachse a und eine kleine Halbachse b auf. Die grosse Halbachse a liegt auf der Montagekraftachse X, die kleine Halbachse b liegt auf der Krafteinleitachse Y. Ein erster Brennpunkt F1 der elliptischen äusseren Oberfläche 210 und ein zweiter Brennpunkt F2 der elliptischen äusseren Oberfläche 210 liegen ebenfalls auf der Montagekraftachse X.

Die grosse Halbachse a wird auf der Montagekraftachse X zwischen dem Mittelpunkt C und einer Montagestelle 252 auf der äusseren Oberfläche 210 gemessen. Die grosse Halbachse a beträgt beispielsweise 12.5mm. Die kleine Halbachse b wird auf der Krafteinleitachse Y zwischen dem Mittelpunkt C und einem Punkt auf einer Übergangslinie 230 eines Übergangsbereichs 23 gemessen. Die kleine Halbachse b beträgt beispielsweise 12.0mm.

Das Rohrteil 2 weist unterschiedliche Bereiche 20, 23, 25 auf. So weist das Rohrteil 2 mehrere Wandungsbereiche 20, mehrere Übergangsbereiche 23 und mehrere Montagebereiche 25 auf. Mit den unterschiedlichen Bereichen 20, 23, 25 umschliesst das Rohrteil 2 den Hohlraum 22 entlang der radialen Achse R vollständig um 360°. Die unterschiedlichen Bereiche 20. 23, 25 tragen die innere Oberfläche 200 und die äussere Oberfläche 210. Jeder der unterschiedlichen Bereiche 20, 23, 25 ist für eine spezielle Funktion optimiert.

Vorzugsweise weist das Rohrteil 2 vier Wandungsbereiche 20 zwischen der Krafteinleitachse Y und der Montagekraftachse X liegen. Die Wandungsbereiche 20 sind für eine möglichst geringe Wandstärke des Rohrteils 2 optimiert. Aufgrund der möglichst geringen Wandstärke gelangt nur ein entsprechend kleiner Anteil der zu messenden Reaktionskraft auf die Wandungsbereiche 20. Jeder Wandungsbereich 20 erstreckt sich entlang der radialen Achse R über einen Wandungsbereichswinkel $\alpha 20 = 50°$. In den Wandungsbereichen 20 ist die äussere Oberfläche 210 weitgehend elliptisch vom Mittelpunkt C weggeformt. In den Wandungsbereichen 20 ist die innere Oberfläche 200 weitgehend elliptisch vom Mittelpunkt C weggeformt. Im Sinne der Erfindung bedeutet das Adjektiv "weitgehend" zumindest zu 90% vollständig.

Die Wandungsbereiche 20 haben eine Wandstärke W20. In Fig. 1 ist die Wandstärke W20 dargestellt. Die Wandstärke W20 wird zwischen einem Punkt der äusseren Oberfläche 210 und einem Punkt der inneren Oberfläche 200 gemessen. Vorzugsweise ist die Wandstärke W20 weitgehend konstant. Die Wandstärke W20 ist die geringste Wandstärke des Rohrteils 2. Beispielsweise beträgt die Wandstärke W20 2.0mm.

Die Wandungsbereiche 20 gehen stetig in die Übergangsbereiche 23 über. Und die Wandungsbereiche 20 gehen stetig in die Montagebereiche 25 über. Stetig im Sinne der Erfindung bedeutet, dass die Wandstärken W20 kontinuierlich und stufenlos in Übergangswandstärken W23 der Übergangsbereiche 23 übergeben, und dass die Wandstärken W20 kontinuierlich und stufenlos in verstärkte Wandstärken W25 der Montagebereiche 25 übergehen. Solche stetige Übergänge sind unter der Wirkung einer Montagekraft mechanisch besonders stabil und zeigen für die Grösse der Montagekraft keine plastische Deformation. Auf der inneren Oberfläche 200 erstreckt sich jeder Wandungsbereich 20 zwischen einem Scheitelpunkt P23 eines Übergangsbereichs 23 und einem Wendepunkt P20 eines Montagebereichs 25.

Vorzugsweise weist das Rohrteil 2 zwei Übergangsbereiche 23 auf, welche Übergangsbereiche 23 auf der Krafteinleitachse Y liegen. Jeder Übergangsbereich 23 erstreckt sich entlang der radialen Achse R über einen Übergangsbereichswinkel $\alpha 23 = 20°$. Die Übergangsbereiche 23 sind für einen möglichst grossen Krafthauptschluss der piezoelektrischen Messanordnung optimiert. Im möglichst grossen Krafthauptschluss gelangt ein entsprechend grosser Anteil der zu messenden Reaktionskraft auf die piezoelektrische Messanordnung.

In einem ersten Übergangsbereich 23 ist das Rohrteil 2 mechanisch mit dem Krafteinleitflansch 3 verbunden. In einem zweiten Übergangsbereich 23 ist das Rohrteil 2 mechanisch mit dem Kraftverankerungsflansch 4 verbunden. In den Übergangsbereichen 23 weist das Rohrteil 2 daher keine äussere Oberfläche auf. Stattdessen weist das Rohrteil 2 in den Übergangsbereichen 23 eine Übergangslinie 230 auf. Die Übergangslinie 230 ist als stetige Verlängerung der äusseren Oberfläche 210 der angrenzenden Wandungen 20 gestrichelt dargestellt. Die Übergangslinie 230 stellt eine Begrenzung des Rohrteils 2 zum Krafteinleitflansch 3 und zum Kraftverankerungsflansch 4 dar. Vorzugsweise ist das Rohrteil 2 in den Übergangsbereichen 23 stoffschlüssig mit dem Krafteinleitflansch 3 und stoffschlüssig mit dem Kraftverankerungsflansch 4 verbunden.

Der erste Übergangsbereich 23 ist mechanisch mit einer ersten Halterung 26 verbunden ist. Der zweite Übergangsbereich 23 ist mechanisch mit einer zweiten Halterung 26 verbunden ist. Vorzugsweise weist das Rohrteil 2 zwei Halterungen 26 auf, welche Halterungen 26 auf der Krafteinleitachse Y liegen. Im Querschnitt sind die zwei Halterungen 26 stempelförmig. Im Querschnitt weisen die zwei Halterungen identische Abmessungen auf. Die zwei Halterungen 26 sind mit zwei inneren Krafteinleitflächen 260 gegeneinander gerichtet. Die zwei inneren Krafteinleitflächen 260 begrenzen den Hohlraum 22 entlang der Krafteinleitachse Y. Die zwei inneren Krafteinleitflächen 260 sind Teil der inneren Oberfläche 200. Vorzugsweise liegen die inneren Krafteinleitflächen 200 in einer Ebene parallel zur Montagekraftachse X. Die inneren Krafteinleitflächen 260 sind mit wenig strenger Ebenheit von vorzugsweise 0.02mm gefertigt. Die inneren Krafteinleitflächen 260 sind mit wenig strenger Parallelität von vorzugsweise 0.02mm gefertigt. Die inneren Krafteinleitflächen 260 sind mit wenig strenger Dickentoleranz von vorzugsweise 0.02mm gefertigt. Entlang der Krafteinleitachse Y weisen die inneren Krafteinleitflächen 260 einen vertikalen Abstand 261 von beispielsweise 5.9mm auf.

In den Übergangsbereichen 23 ist ein Teil der inneren Oberfläche 200 parabelförmig. Jeder Übergangsbereich 23 weist zwei Parabeln auf. Jede Parabel weist einen Scheitelpunkt P23 auf.

Die Übergangsbereiche 23 haben eine Übergangswandstärke W23. In Fig. 1 ist die Übergangswandstärke W23 dargestellt. Die Übergangswandstärke W23 wird auf der Krafteinleitachse Y zwischen einem Punkt der Übergangslinie 230 und einem Punkt der inneren Krafteinleitfläche 260 gemessen. Die Übergangswandstärke W23 ist die grösste Wandstärke des Rohrteils 2. Beispielsweise beträgt die Übergangswandstärke W23 10mm.

Vorzugsweise weist das Rohrteil 2 zwei Montagebereiche 25 auf, welche Montagebereiche 25 auf der Montagekraftachse X liegen. Die Montagebereiche 25 sind für eine gezielte lokale mechanische Verstärkung des Rohrteils 2 optimiert. Vorzugsweise weist jeder Montagebereich 25 eine Montagestelle 252 auf der äusseren Oberfläche 210 und eine Verstärkungsstelle 253 auf der inneren Oberfläche 200 auf. Bei der Montagestelle 252 ist die äussere Oberfläche 210 elliptisch vom Mittelpunkt C weggeformt. Bei der Verstärkungsstelle 253 ist die innere Oberfläche 200 konkav zum Mittelpunkt C hingeformt. Durch die elliptische Formgebung der äusseren Oberfläche und die konkave Formgebung der inneren Oberfläche wird eine plastische Deformation des Montagebereichs unter der Wirkung der Druckkräfte und Zugkräfte gezielt vermieden.

Jeder Montagebereich 25 erstreckt sich entlang der radialen Achse R über einen Montagebereichswinkel $\alpha 25 = 20°$. Eine radiale Ausdehnung eines Montagebereichs 25 entlang der radialen Achse R ist durch eine Grösse des Montagebereichswinkels $\alpha 25$ genau einstellbar. Auf der inneren Oberfläche 200 erstreckt sich jeder Montagebereich 25 zwischen zwei Wendepunkten P20. Jeder Montagebereich 25 erstreckt sich entlang der Krafteinleitungsachse Y über eine Verstärkungshöhe 251. Eine axiale Ausdehnung eines Montagebereichs 25 entlang der Krafteinleitungsachse Y ist durch eine Grösse der Verstärkungshöhe 251 genau einstellbar. Beispielsweise beträgt die Verstärkungshöhe 251 6.0mm. Vorzugsweise weist die innere Oberfläche 200 bei der Verstärkungsstelle 253 einen konstanten konkaven Verstärkungsradius R25 auf, welcher Verstärkungsradius R25 von einem Bezugspunkt P25 gemessen wird, welcher Bezugspunkt P25 ausserhalb des Rohrteils 2 auf der Montagekraftachse X liegt. Eine axiale Ausdehnung eines Montagebereichs 25 entlang der Montagekraftachse X ist durch eine Grösse des Verstärkungsradius R25 genau einstellbar. Beispielsweise beträgt ein Verstärkungsradius R25 16.0mm.

Die Montagebereiche 25 haben eine verstärkte Wandstärke W25. In Fig. 1 ist die verstärkte Wandstärke W25 dargestellt. Die verstärkte Wandstärke W25 wird auf der Montagekraftachse X zwischen einer Montagestelle 252 auf der äusseren Oberfläche 210 und einer Verstärkungsstelle 253 auf der inneren Oberfläche 200 gemessen. Beispielsweise beträgt die verstärkte Wandstärke W25 2.5mm.

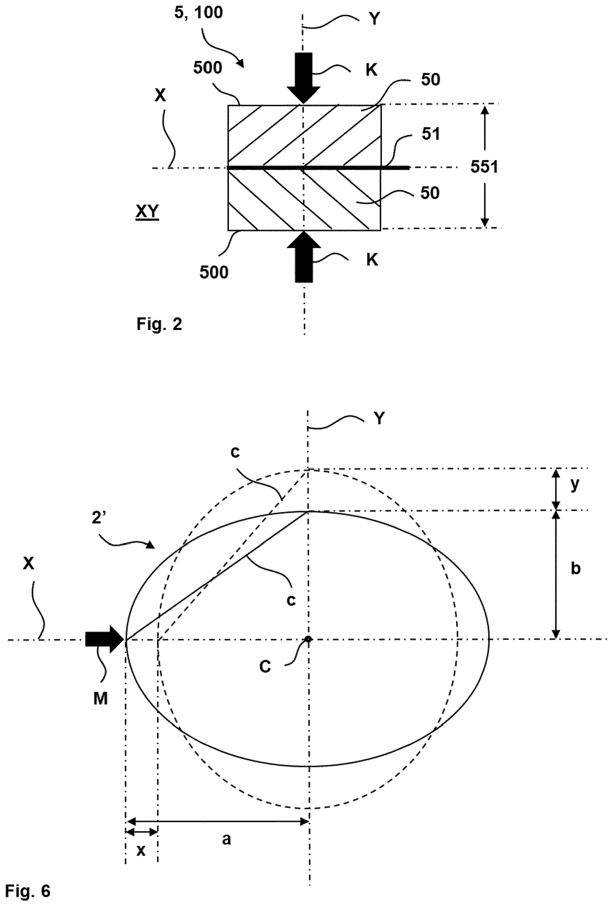

Fig. 2 zeigt einen Querschnitt durch einen Teil einer Ausführungsform einer piezoelektrischen Messanordnung 5 des erfindungsgemässen Kraftaufnehmers 100.

Die piezoelektrische Messanordnung 5 weist mindestens ein piezoelektrisches Messelement 50 und mindestens eine Elektrode 51 auf. Entlang der Krafteinleitachse Y weist die piezoelektrische Messanordnung 5 eine vertikale Höhe 551 von beispielsweise 6.00mm auf. Entlang der Montagekraftachse X weist die piezoelektrische Messanordnung 5 eine Breite von beispielsweise 12.0mm auf. Entlang der Längsachse weist die piezoelektrische Messanordnung 5 eine Länge von beispielsweise 12.0mm auf.

Die piezoelektrische Messanordnung 5 weist äussere Krafteinleitflächen 500 auf, auf denen die zu messende Kraft K entlang der Krafteinleitachse Y einwirkt. In Fig. 2 ist die Kraft K als schwarzer Pfeil dargestellt. Vorzugsweise weist die piezoelektrische Messanordnung 5 zwei äussere Krafteinleitflächen 500 auf, auf denen die zu messende Kraft K entlang der Krafteinleitachse Y einwirkt. Die äusseren Krafteinleitflächen 500 liegen in einer Ebene parallel zu Montagekraftachse X. Die Fertigungstoleranzen wie Ebenheit, Parallelität, Dickentoleranz, usw. der äusseren Krafteinleitflächen 500 sind wenig streng gewählt, so dass eine kostengünstige Fertigung möglich ist. Die äusseren Krafteinleitflächen 500 sind mit einer wenig strengen Ebenheit von vorzugsweise 0.03mm gefertigt. Die äussere Krafteinleitflächen 500 sind mit einer wenig strengen Parallelität von vorzugsweise 0.03mm gefertigt. Die äussere Krafteinleitflächen 500 sind mit einer wenig strengen Dickentoleranz von vorzugsweise 0.03mm gefertigt.

Das piezoelektrische Messelement 50 ist scheibenförmig und bestehen aus piezoelektrischem Kristallmaterial wie Quarz ($SiO_2$ Einkristall), Calcium-Gallo-Germanat ($Ca_3Ga_2Ge_4O_{14}$ oder CGG), Langasit ($La_3Ga_5SiO_{14}$ oder LGS), Turmalin, Galliumorthophosphat, Piezokeramik, usw. Das piezoelektrische Messelement 50 ist kristallographisch so orientiert geschnitten, dass es eine hohe Empfindlichkeit für die zu messende Kraft K hat. Die Empfindlichkeit besagt, wie viele elektrische Polarisationsladungen für eine Grösse der zu messende Kraft K erzeugt werden. Vorzugsweise ist das piezoelektrische Messelement 50 gemäss dem Longitudinaleffekt so orientiert, dass auf den Oberflächen, auf denen die Kraft K entlang der Krafteinleitachse Y einwirkt, auch negative und positive elektrischer Polarisationsladungen erzeugt werden. Eine Anzahl der elektrischen Polarisationsladungen ist proportional zur Grösse der Kraft K. Die Anzahl der elektrischen Polarisationsladungen steigt quadratisch mit der Grösse der Oberflächen, auf denen die Kraft K entlang der Krafteinleitachse Y einwirkt. Je grösser die Oberflächen sind, desto höher ist die Empfindlichkeit der piezoelektrischen Messanordnung 5. Bei Kenntnis der vorliegenden Erfindung kann der Fachmann aber auch anders orientierte piezoelektrische Messelemente verwenden, wie solche nach dem Transversaleffekt, wo elektrischer Polarisationsladungen auf senkrecht zu den Oberflächen, auf denen die Kraft einwirkt, erzeugt werden.

Die piezoelektrische Messanordnung 5 gemäss Fig. 2 weist vorzugsweise zwei piezoelektrische Messelemente 50 auf. Die zwei piezoelektrischen Messelemente 50 sind mit entgegengesetzter kristallographischer Orientierung zueinander angeordnet. Dadurch sind Oberflächen der zwei piezoelektrischen Messelemente 50, auf denen elektrische Polarisationsladungen mit gleichem Vorzeichen erzeugt werden, gegeneinander gerichtet. Bezüglich der Krafteinleitachse Y ist die Elektrode 51 zwischen diesen Oberflächen der zwei piezoelektrischen Messelemente 50 angeordnet. Die Elektrode 51 steht im direkten mechanischen Kontakt mit diesen Oberflächen der zwei piezoelektrischen Messelemente 50. Die Elektrode 51 greift die elektrischen Polarisationsladungen von diesen Oberflächen der zwei piezoelektrischen Messelemente 50 ab. Die abgegriffenen elektrischen Polarisationsladungen werden als elektrische Signale über elektrische Leiter an eine Auswerteeinheit weitergeleitet und ausgewertet. Die elektrischen Leiter und die Auswerteeinheit sind figürlich nicht dargestellt.

Die Abmessungen der piezoelektrischen Messanordnung 5 sind dahingehend optimiert, dass die Oberflächen der piezoelektrischen Messelemente 50 für eine hohe Empfindlichkeit möglichst gross sind und dass die Fertigungstoleranzen wie Ebenheit, Parallelität und Dickentoleranz der äusseren Krafteinleitflächen 500 wenig streng gewählt und somit kostengünstig zu fertigen sind.

Die Abmessung der piezoelektrischen Messanordnung 5 ist entlang der Krafteinleitachse Y im Vergleich zum Hohlraum 22 gezielt mit einem vertikalen Übermass gefertigt. In der dargestellten beispielhaften Ausführungsform weist die piezoelektrische Messanordnung 5 entlang der Krafteinleitachse Y eine vertikale Höhe 551 von 6,00mm auf, während das Hohlprofil 2 entlang der Krafteinleitachse Y zwischen den inneren Krafteinleitflächen 260 einen vertikalen Abstand 261 von 5.90mm auf aufweist. Die Differenz zwischen der vertikalen Höhe 551 und dem vertikalen Abstand 261 ist das vertikale Übermass. In der beispielhaften Ausführungsform beträgt das vertikale Übermass 0.10mm.

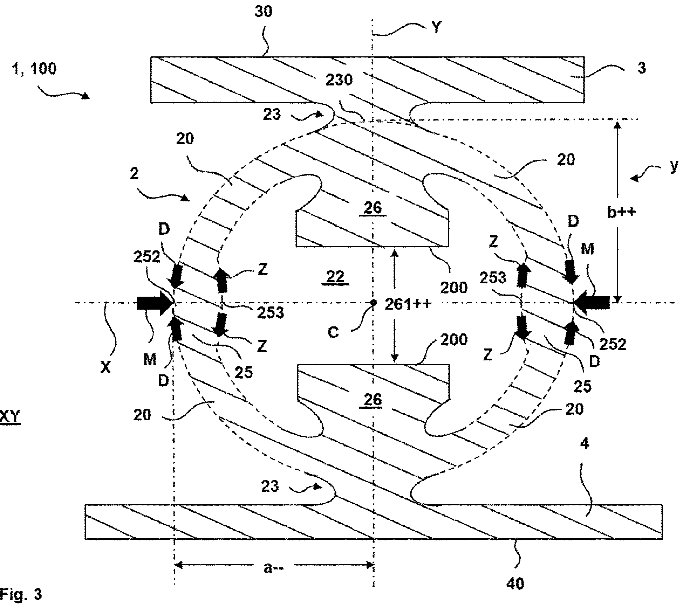

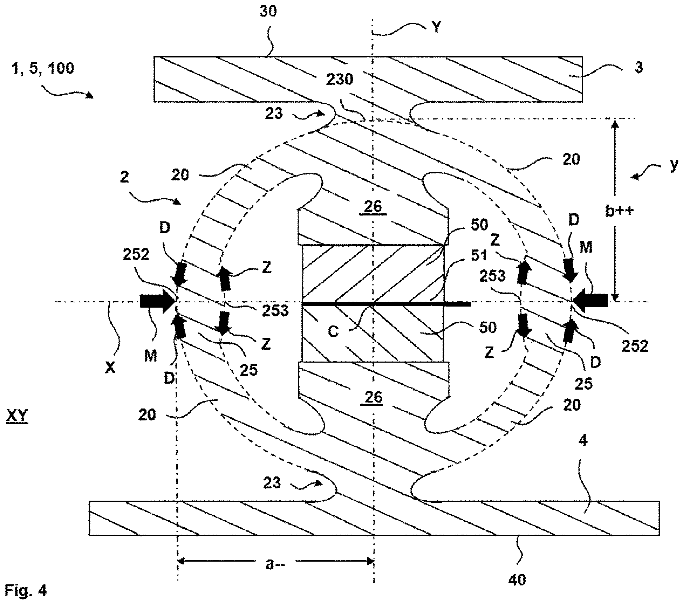

Die piezoelektrische Messanordnung 5 ist im Hohlraum 22 montierbar. Um die piezoelektrische Messanordnung 5 im Hohlraum 22 des Rohrteils 2 zu montieren, wird das Rohrteil 2 entlang der Krafteinleitachse Y aufgeweitet. Die Aufweitung ist mindestens so gross wie das vertikale Übermass und die Fertigungstoleranzen von Rohrteil 2 und piezoelektrischer Messanordnung 5 entlang der Krafteinleitachse Y. Dazu wird wie in Fig. 3 und 4 dargestellt, eine entlang der Montagekraftachse X wirkende Montagekraft M angelegt. Vorzugsweise wird die Montagekraft M aussenseitig an den zwei Montagestellen 252 angelegt. Die Montagekraft M ist in Fig. 3 und 4 als schwarzer Pfeil dargestellt. Unter der Wirkung der Montagekraft M wird das Rohrteil 2 in Richtung der Montagekraftachse X elastisch komprimiert und in Richtung der Krafteinleitachse Y elastisch aufgeweitet. Die Komprimierung führt zu einer komprimierten grossen Halbachse a-- des Rohrteils 2. Die Aufweitung führt zu einer aufgeweiteten kleinen Halbachse b++ des Rohrteils 2. Die Komprimierung und Aufweitung des Rohrteils 2 ist in Fig. 3 und 4 durch eine gestrichelte innere Oberfläche 200 und durch eine gestrichelte äussere Oberfläche 210 dargestellt.

Im Vergleich mit den Wandungsbereichen 20 sind die Montagebereiche 25 lokal verstärkt. Die verstärkte Wandstärke W25 der Montagebereiche 25 ist grösser als die Wandstärke W20 der Wandungsbereiche 20. Nur aufgrund der verstärkten Wandstärke W25 ist die Komprimierung bei den Montagestellen 252 und bei den Verstärkungsstellen 253 elastisch. Wie in Fig. 3 und 4 mit schwarzen Pfeilen eingezeichnet, führt die Montagekraft M bei den Montagestellen 252 auf der äusseren Oberfläche 210 zu Druckkräften D und bei den Verstärkungsstellen 253 auf der inneren Oberfläche 210 zu Zugkräften Z. Die Druckkräfte D wirken auf der äusseren Oberfläche 210 tangential zu den Montagestellen 252 hin und von den Übergangsbereichen 23 weg. Die Zugkräfte Z wirken auf der inneren Oberfläche 200 tangential von den Verstärkungsstellen 253 weg und zu den Übergangsbereichen 23 hin.

Unter Berücksichtigung der Fertigungstoleranzen Ebenheit und Parallelität des Rohrteils 2 und der piezoelektrischen Messanordnung 5, wird das Rohrteil 2 in der beispielhaften Ausführungsform entlang der Krafteinleitachse Y um eine vertikale Aufweitung y von 0.15mm aufgeweitet. Der aufgeweitete vertikale Abstand 260++ zwischen den inneren Krafteinleitflächen 260 des aufgeweiteten Rohrteils 2 beträgt 6.05mm. Die piezoelektrische Messanordnung 5 wird nun im vertikal aufgeweiteten Rohrteil 2 montiert. Vorzugsweise wird die piezoelektrische Messanordnung 5 mit einer vertikalen Höhe 551 von 6.00mm zwischen den inneren Krafteinleitflächen 260 des aufgeweiteten Rohrteils 2 montiert.

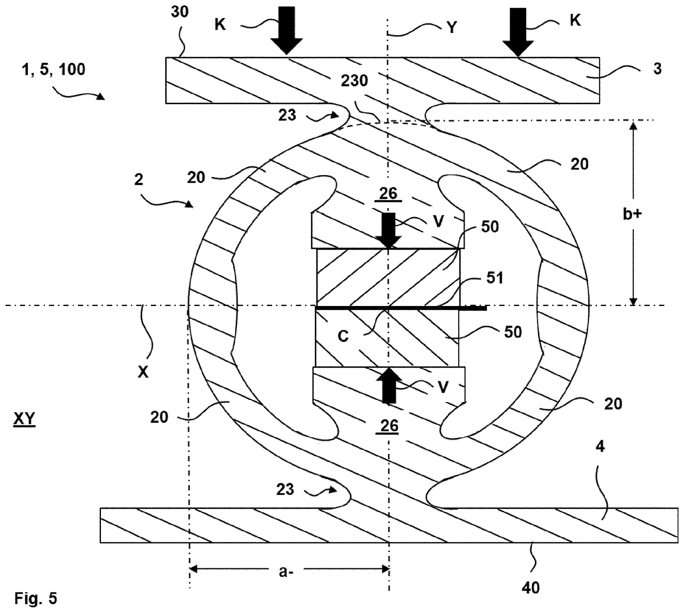

Sobald die piezoelektrische Messanordnung 5 dort montiert ist, wird die Montagekraft M vom Rohrteil 2 gelöst. Aufgrund des vertikalen Übermasses von 0.10mm des Hohlraums 22 entlang der Krafteinleitachse Y im Vergleich zur Abmessung der piezoelektrischen Messanordnung 5 bleiben die Komprimierung und die Aufweitung des Rohrteils 2 teilweise bestehen. So bleibt eine vertikale Aufweitung y des Rohrteils 2 von 0.10mm bestehen. Gemäss Fig. 5 wird durch Lösen der Montagekraft die komprimierte horizontalen Ausdehnung a-- in eine restkomprimierte horizontale Ausdehnung a- verformt und die aufgeweitete vertikale Ausdehnung b++ wird in eine restaufgeweitete vertikale Ausdehnung b+ verformt.

Die teilweise bestehen bleibende vertikale Aufweitung y erzeugt eine mechanische Vorspannung V der piezoelektrischen Messanordnung 5 im Rohrteil 2. Gemäss Fig. 5 liegen durch die mechanische Vorspannung V entlang der Krafteinleitachse Y Oberflächen der piezoelektrischen Messelemente 50 und der Elektrode 51 kraftschlüssig aufeinander auf, so dass keine elektrisch nichtkontaktierten Bereiche mit unvollständigem Ladungsabgriff auftreten und so dass sich Rauheiten und Unebenheiten dieser Oberflächen schliessen, was zu einer hohen Messwiederholbarkeit und hohen Linearität des Kraftaufnehmers 100 führt.

Nun weist das Material des Rohrteils 2 eine materialspezifische Elastizitätsgrenze auf, so dass die Gefahr besteht, dass sich das Rohrteil 2 bei der Montage teilweise plastisch aufweitet. Ein teilweise plastisch aufgeweitetes Rohrteil 2 nimmt nach dem Lösen der Montagekraft M eine nicht vorherbestimmbare Form ein, so dass eine zu geringe mechanische Vorspannung V wirkt. Und bei einem zu kleinen vertikalen Übermass ist die nach dem Lösen der Montagekraft M wirkende mechanische Vorspannung V sowieso zu gering. Gerade das in der beispielhaften Ausführungsform verwendete Aluminium als Material für das Gehäuseprofil 1 weist im Vergleich zu Eisen, Eisenlegierungen, Stahl, usw. eine geringe Elastizitätsgrenze auf.

Für eine grosse Halbachse a, welche grösser als die kleine Halbachse b ist, erzeugt die Montagekraft M eine grössere vertikale Aufweitung y, als für eine grosse Halbachse a, welche gleich gross wie die kleine Halbachse b ist. Vorzugsweise erzeugt die Montagekraft M für eine grosse Halbachse a, welche 5% grösser als die kleine Halbachse b ist, eine weitgehend 5% grössere vertikale Aufweitung y, als für eine grosse Halbachse a, welche gleich gross wie die kleine Halbachse b ist.

Zur Veranschaulichung zeigt Fig. 6 eine Darstellung der Komprimierung und Aufweitung eines modellierten Rohrteils 2'. Das modellierte Rohrteil 2' ist als Ellipse mit einer kleinen Halbachse b und einer grossen Halbachse a dargestellt. Die Ellipse ist mit einer durchgezogenen Linie dargestellt. Nach dem Satz des Pythagoras gilt:

$$c^2 = (a + x)^2 + b^2$$

wobei c als Hypotenuse bezeichnet wird.

Unter der Wirkung der entlang der Montagekraftachse X wirkenden Montagekraft M wird das modellierte Rohrteil 2' entlang der Krafteinleitachse Y aufgeweitet. Die Aufweitung des modellierten Rohrteils 2' resultiert in einer aufgeweiteten Ellipse. Die aufgeweitete Ellipse ist mit einer gestrichelten Linie dargestellt. Die kleine Halbachse b der aufgeweiteten Ellipse ist um eine vertikale Aufweitung y vergrössert, die grosse Halbachse a der aufgeweiteten Ellipse ist um eine horizontale Komprimierung x verkleinert. Für einen starren Körper bleibt die Länge der Hypotenuse c bei der Aufweitung unverändert. Somit gilt:

$$a^2 + b^2 = c^2 = (a - x)^2 + (b + y)^2$$

Aufgelöst nach der vertikalen Aufweitung y gilt:

$$y = \sqrt{b^2 + 2ax - x^2} - b$$

Für a > b oder a = (1+n)b, wobei n ein positiver Prozentsatz ist, gilt:

$$y = \sqrt{b^2 + 2(1+n)bx - x^2} - b$$

Diese Gleichung lässt sich für einen beliebig grossen positiven Prozentsatz n lösen, wobei ein Betrag der vertikalen Aufweitung y immer grösser als ein Betrag der horizontalen Komprimierung x ist.

Vorzugsweise gilt für eine grosse Halbachse a, welche 5% grösser als die kleine Halbachse b ist, dass n = 5%. Und für eine kleine Halbachse b = 25mm und für eine horizontale Komprimierung x = 4% resultiert eine weitgehend 5% grössere vertikale Aufweitung y = 4.2%.

**Bezugszeichenliste**

| | |
|---|---|
| 1 | Gehäuseprofil |
| 2 | Rohrteil |
| 2' | modelliertes Rohrteil |
| 3 | Krafteinleitflansch |
| 4 | Kraftverankerungsflansch |
| 5 | piezoelektrische Messanordnung |
| 20 | Wandungsbereich |
| 22 | Hohlraum |
| 23 | Übergangsbereich |
| 25 | Montagebereich |
| 26 | Halterung |
| 30 | Krafteinleitfläche |
| 40 | Kraftverankerungsfläche |
| 50 | piezoelektrisches Messelement |
| 51 | Elektrode |
| 100 | Kraftaufnehmer |
| 200 | innere Oberfläche |
| 210 | äussere Oberfläche |
| 230 | Übergangslinie |
| 251 | Verstärkungshöhe |
| 252 | Montagestelle |
| 253 | Verstärkungsstelle |
| 260 | innere Krafteinleitfläche |
| 261 | vertikaler Abstand |
| 261++ | aufgeweiteter vertikaler Abstand |
| 500 | äussere Krafteinleitfläche |
| 551 | vertikale Höhe |
| $\alpha$20 | Wandungsbereichwinkel |
| $\alpha$23 | Übergangsbereichwinkel |
| $\alpha$25 | Montagebereichwinkel |
| a | grosse Halbachse |
| a- | restkomprimierte grosse Halbachse |
| a-- | komprimierte grosse Halbachse |
| b | kleine Halbachse |
| b+ | restaufgeweitete kleine Halbachse |
| b++ | aufgeweitete kleine Halbachse |
| c | Hypotenuse |
| C | Mittelpunkt |

| | |
|---|---|
| D | Druckkraft |
| F1 | erster Brennpunkt |
| F2 | zweiter Brennpunkt |
| n | positiver Prozentsatz |
| K | Kraft |
| M | Montagekraft |
| P23 | Scheitelpunkt |
| P20 | Wendepunkt |
| P25 | Bezugspunkt |
| R | radiale Achse |
| R25 | Verstärkungsradius |
| V | mechanische Vorspannung |
| W20 | Wandstärke |
| W23 | Übergangswandstärke |
| W25 | verstärkte Wandstärke |
| x | horizontale Komprimierung |
| X | Montagekraftachse |
| XY | Querschnittsebene |
| Y | Krafteinleitachse |
| y | vertikale Aufweitung |
| Z | Zugkraft |

**Patentansprüche**

1. WIM-Kraftaufnehmer (100), mit einem Gehäuseprofil (1) und einer piezoelektrischen Messanordnung (5); welche piezoelektrische Messanordnung (5) unter der Wirkung einer zu messenden Reaktionskraft (K) elektrische Polarisationsladungen erzeugt; welches Gehäuseprofil (1) ein Rohrteil (2) und einen Hohlraum (22) im Inneren des Rohrteils (2) aufweist; welche Reaktionskraft über das Gehäuseprofil (1) entlang einer Krafteinleitachse (Y) auf die piezoelektrische Messanordnung (5) wirkt; welche piezoelektrische Messanordnung (5) entlang der Krafteinleitachse (Y) unter mechanischer Vorspannung (V) im Hohlraum (22) montiert ist; wobei an das Rohrteil (2) eine entlang einer Montagekraftachse (X) wirkende Montagekraft (M) anlegbar ist, welches Rohrteil (2) zur Montage der piezoelektrischen Messanordnung (5) im Hohlraum (22) durch eine angelegte Montagekraft (M) entlang der Krafteinleitachse (Y) aufweitbar ist; **dadurch gekennzeichnet, dass** das Rohrteil (2) in einer von der Krafteinleitachse (Y) und der Montagekraftachse (X) aufgespannten Querschnittsebene (XY) elliptisch geformt ist, mit einer grossen Halbachse (a) entlang der Montagekraftachse (X) und mit einer kleinen Halbachse (b) entlang der Krafteinleitachse (Y).

2. WIM-Kraftaufnehmer (100) nach Anspruch 1, **dadurch gekennzeichnet, dass** das Rohrteil (2) eine äussere Oberfläche (210) und einen Mittelpunkt (C) aufweist, welche äussere Oberfläche (210) elliptisch vom Mittelpunkt (C) weggeformt ist.

3. WIM-Kraftaufnehmer (100) nach Anspruch 2, **dadurch gekennzeichnet, dass** das Rohrteil (2) mindestens einen Montagebereich (25) und eine innere Oberfläche (200) aufweist, welcher Montagebereich (25) auf der Montagekraftachse (X) liegt; und dass die innere Oberfläche (200) im Montagebereich (25) konkav zum Mittelpunkt (C) hingeformt ist.

4. WIM-Kraftaufnehmer (100) nach Anspruch 3, **dadurch gekennzeichnet, dass** sich der Montagebereich (25) auf der inneren Oberfläche (200) zwischen zwei Wendepunkten (P20) erstreckt; und dass der Montagebereich (25) auf der inneren Oberfläche (200) einen konstanten konkaven Verstärkungsradius (R25) aufweist.

5. WIM-Kraftaufnehmer (100) nach einem der Ansprüche 3 oder 4, **dadurch gekennzeichnet, dass** sich der Montagebereich (25) entlang einer radialen Achse (R) über einen Montagebereichswinkel ($\alpha$25) erstreckt; oder dass sich der Montagebereich (25) entlang der Krafteinleitungsachse (Y) über eine Verstärkungshöhe 251 erstreckt.

6. WIM-Kraftaufnehmer (100) nach einem der Ansprüche 2 bis 5, **dadurch gekennzeichnet, dass** das Rohrteil (2) mehrere Wandungsbereiche (20) aufweist; welche äussere Oberfläche (210) in den Wandungsbereichen (2) elliptisch vom Mittelpunkt (C) weggeformt ist, welche innere Oberfläche (200) in den Wandungsbereichen (20) elliptisch vom Mittelpunkt (C) weggeformt ist; und dass die Wandungsbereiche (20) eine Wandstärke (W20) haben, welche Wandstärke (W20) weitgehend konstant ist.

7. WIM-Kraftaufnehmer (100) nach Anspruch 6, **dadurch gekennzeichnet, dass** die Wandungsbereiche (20) eine Wandstärke (W20) aufweisen; dass der Montagebereich (25) eine verstärkte Wandstärke (W25) aufweist; und dass die verstärkte Wandstärke (W25) grösser als die Wandstärke (W20) ist.

8. WIM-Kraftaufnehmer (100) nach einem der Ansprüche 6 oder 7, **dadurch gekennzeichnet, dass** sich der Montagebereich (25) auf der inneren Oberfläche (200) zwischen zwei Wendepunkten (P20) erstreckt; und dass der Montagebereich (25) in einem Wendepunkt (P20) stetig in einen Wandungsbereich (20) übergeht.

9. WIM-Kraftaufnehmer (100) nach einem der Ansprüche 1 bis 8, **dadurch gekennzeichnet, dass** das der Hohlraum (22) entlang der Krafteinleitachse (Y) im Vergleich zur Abmessung der piezoelektrischen Messanordnung (5) gezielt mit einem vertikalen Übermass gefertigt ist.

10. WIM-Kraftaufnehmer (100) nach Anspruch 9, **dadurch gekennzeichnet, dass** der Hohlraum (22) entlang der Krafteinleitachse (Y) von inneren Krafteinleitflächen (260) begrenzt ist; dass die inneren Krafteinleitflächen (260) einen vertikalen Abstand (261) aufweisen; dass die piezoelektrischen Messanordnung (5) entlang der Krafteinleitachse (Y) eine vertikale Höhe (551) aufweist; und dass eine Differenz zwischen dem vertikalen Abstand (261) und der vertikalen Höhe (551) das vertikale Übermass ist.

11. WIM-Kraftaufnehmer (100) nach Anspruch 9, **dadurch gekennzeichnet, dass** zur Montage der piezoelektrischen Messanordnung (5) im Hohlraum (22), die kleine Halbachse (b) entlang der Krafteinleitachse (Y) zu einer aufgeweiteten kleinen Halbachse (b++) aufweitbar ist, welche Aufweitung mindestens so gross wie das vertikale Übermass und Fertigungstoleranzen von Rohrteil (2) und piezoelektrischer Messanordnung (5) entlang der Krafteinleitachse (Y) ist.

12. WIM-Kraftaufnehmer (100) nach einem der Ansprüche 1 bis 11, **dadurch gekennzeichnet, dass** die piezoelektrische Messanordnung (5) im Rohrteil (2) mit aufgeweiteter kleinen Halbachse (b++) montierbar ist.

13. WIM-Kraftaufnehmer (100) nach Anspruch 12, **dadurch gekennzeichnet, dass** die aufgeweitete kleine Halbachse (b++) mit der montierten piezoelektrischen Messanordnung (5) zu einer restaufgeweiteten kleinen Halbachse (b+) verformbar ist, welche Aufweitung genau so gross wie das vertikale Übermass und Fertigungstoleranzen von Rohrteil (2) und piezoelektrischer Messanordnung (5) entlang der Krafteinleitachse (Y) ist.

14. WIM-Kraftaufnehmer (100) nach Anspruch 13, **dadurch gekennzeichnet, dass** die aufgeweitete kleine Halbachse (b++) mit der montierten piezoelektrischen Messanordnung (5) durch Lösen einer entlang einer Krafteinleitachse (Y) wirkenden Montagekraft (M) zur restaufgeweiteten kleinen Halbachse (b+) verformbar ist; und dass die restaufgeweitete kleine Halbachse (b+) die mechanische Vorspannung (V) erzeugt.

15. Gehäuseprofil (1) für einen WIM-Kraftaufnehmer (100) nach einem der Ansprüche 1 bis 14, **dadurch gekennzeichnet, dass** die grosse Halbachse (a) weitgehend 5% grösser als die kleine Halbachse (b) ist.

**Claims**

1. A WIM force transducer (100) comprising a housing profile (1) and a piezoelectric measuring arrangement (5); which piezoelectric measuring arrangement (5) generates electric polarization charges under the impact of a reaction force (K) to be measured; which housing profile (1) comprises a tubular part (2) and a cavity (22) in the interior of the tubular part (2); which reaction force acts on the piezoelectric measuring arrangement (5) via the housing profile (1) along a force introduction axis (Y); which piezoelectric measuring arrangement (5) is mounted under mechanical prestress (V) along the force introduction axis (Y) within the cavity (22); wherein a mounting force (M) that acts along a mounting force axis (X) can be applied to the tubular part (2), wherein for mounting the piezoelectric measuring arrangement (5) in the cavity (22) the tubular part (2) can be expanded along the force introduction axis (Y) by an applied mounting force (M); **characterized in that** in a cross-sectional plane (XY) defined by the force introduction axis (Y) and the mounting force axis (X) the tubular part (2) is elliptical in shape with a major semiaxis (a) extending along the mounting force axis (X) and a minor semiaxis (b) extending along the force introduction axis (Y).

2. The WIM force transducer (100) according to claim 1, **characterized in that** the tubular part (2) has an outer surface (210) and a center point (C), which outer surface (210) is formed elliptically away from the center point (C) .

3. The WIM force transducer (100) according to claim 2, **characterized in that** the tubular part (2) comprises at least one mounting area (25) and an inner surface (200), which mounting area (25) is on the mounting force axis (X); and **in that** in the mounting area (25) the inner surface (200) is formed to be concave towards the center point (C).

4. The WIM force transducer (100) according to claim 3, **characterized in that** the mounting area (25) extends on the inner surface (200) between two turning points (P20); and on the inner surface (200) the mounting area (25) has a constant concave reinforcement radius (R25).

5. The WIM force transducer (100) according to any of the claims 3 or 4, **characterized in that** the mounting area (25) extends along a radial axis (R) over a mounting area angle ($\alpha$25); or **in that** the mounting area (25) extends along the force introduction axis (Y) over a reinforcement height 251.

6. The WIM force transducer (100) according to any of the claims 2 to 5, **characterized in that** the tubular part (2) has a plurality of wall areas (20); which outer surface (210) in the wall areas (2) is formed elliptically away from the center point (C), which inner surface (200) in the wall areas (20) is formed elliptically away from the center point (C); and **in that** the wall areas (20) have a wall thickness (W20), which wall thickness (W20) is essentially constant.

7. The WIM force transducer (100) according to claim 6, **characterized in that** the wall areas (20) have a wall thickness (W20); that the mounting area (25) has a reinforced wall thickness (W25); and **in that** the reinforced wall thickness (W25) is greater than the wall thickness (W20).

8. The WIM force transducer (100) according to any of the claims 6 or 7, **characterized in that** the mounting area (25) extends on the inner surface (200) between two turning points (P20); and **in that** at a turning point (P20) the mounting area (25) is continuous with a wall area (20).

9. The WIM force transducer (100) according to any of the claims 1 to 8, **characterized in that** along the force introduction axis (Y) the cavity (22) is specifically manufactured with a vertical oversize as compared to the dimensions of the piezoelectric measuring arrangement (5).

10. The WIM force transducer (100) according to claim 9, **characterized in that** along the force introduction axis (Y) the cavity (22) is delimited by inner force introduction surfaces (260); the inner force introduction surfaces (260) have a vertical distance (261) from each other; the piezoelectric measuring arrangement (5) has a vertical height (551) along the force introduction axis (Y); and **in that** a difference between the vertical distance (261) and the vertical height (551) is the vertical oversize.

11. The WIM force transducer (100) according to claim 9, **characterized in that** for mounting the piezoelectric measuring arrangement (5) in the cavity (22) the minor semiaxis (b) can be expanded to an expanded minor semiaxis (b++) along the force introduction axis (Y), which expansion is at least as large as the vertical oversize and manufacturing tolerances of the tubular part (2) and the piezoelectric measuring arrangement (5) along the force introduction axis (Y).

12. The WIM force transducer (100) according to any of the claims 1 to 11, **characterized in that** the piezoelectric measuring arrangement (5) can be mounted in the tubular part (2) having an expanded minor semiaxis (b++).

13. The WIM force transducer (100) according to claim 12, **characterized in that** the expanded minor semiaxis (b++) with the mounted piezoelectric measuring arrangement (5) can be deformed to a residually expanded minor semiaxis (b+), which expansion is of the same amount as the vertical oversize and manufacturing tolerances of the tubular part (2) and the piezoelectric measuring arrangement (5) along the force introduction axis (Y).

14. The WIM force transducer (100) according to claim 13, **characterized in that** the expanded minor semiaxis (b++) with the mounted piezoelectric measuring arrangement (5) can be deformed to the residually expanded minor semiaxis (b+) by releasing a mounting force (M) acting along a force introduction axis (Y); and **in that** the residually expanded minor semiaxis (b+) generates the mechanical prestress (V).

15. A housing profile (1) for a WIM force transducer (100) according to any of the claims 1 to 14, **characterized in that** the major semiaxis (a) is essentially 5% larger than the minor semiaxis (b).

**Revendications**

1. Capteur de force WIM (100) comprenant un profilé de boîtier (1) et un agencement de mesure piézoélectrique (5); lequel agencement de mesure piézoélectrique (5) génère des charges électriques de polarisation sous l'action d'une force de réaction (K) à mesurer; lequel profilé de boîtier (1) comprend une pièce tubulaire (2) et une cavité (22) à l'intérieur de ladite pièce tubulaire (2); laquelle force de réaction agit par l'intermédiaire du profilé de boîtier (1) le long d'un axe d'introduction de force (Y) sur l'agencement de mesure piézoélectrique (5); lequel agencement de mesure piézoélectrique (5) est monté sous précontrainte mécanique (V) à l'intérieur de la cavité (22) le long de l'axe d'introduction de force (Y); dans lequel une force de montage (M) qui agit le long d'un axe de force de montage (X) peut être appliquée à la pièce tubulaire (2), dans lequel, pour le montage du agencement de mesure piézoélectrique (5) dans la cavité (22), la pièce tubulaire (2) peut être élargie le long de l'axe d'introduction de force (Y) par une force de montage appliquée (M); **caractérisé en ce que,** dans un plan de section transversale (XY) défini par l'axe d'introduction de force (Y) et l'axe de force de montage (X), la pièce tubulaire (2) est de forme elliptique avec un demi-axe majeur (a) s'étendant le long de l'axe de force de montage (X) et un demi-axe mineur (b) s'étendant le long de l'axe d'introduction de force (Y).

2. Capteur de force WIM (100) selon la revendication 1, **caractérisé en ce que** la pièce tubulaire (2) présente une surface extérieure (210) et un point central (C), dans lequel la surface extérieure (210) est formée de manière elliptique à partir du point central (C).

3. Capteur de force WIM (100) selon la revendication 2, **caractérisé en ce que** la pièce tubulaire (2) comprend au moins une zone de montage (25) et une surface intérieure (200), laquelle zone de montage (25) se situe sur l'axe de force de montage (X) ; et **en ce que** dans ladite zone de montage (25), la surface intérieure (200) est formée pour être concave vers le point central (C).

4. Capteur de force WIM (100) selon la revendication 3, **caractérisé en ce que** la zone de montage (25) s'étend sur la surface intérieure (200) entre deux points d'inflexion (P20); et **en ce que** la zone de montage (25) présente un rayon de renforcement concave (R25) constant sur la surface intérieure (200) .

5. Capteur de force WIM (100) selon l'une quelconque des revendications 3 ou 4, **caractérisé en ce que** la zone de montage (25) s'étend le long d'un axe radial (R) sur un angle de zone de montage ($\alpha25$); ou **en ce que** la zone de montage (25) s'étend le long de l'axe d'introduction de force (Y) sur une hauteur de renfort 251.

6. Capteur de force WIM (100) selon l'une quelconque des revendications 2 à 5, **caractérisé en ce que** la pièce tubulaire (2) comporte une pluralité de zones de paroi (20); dans lequel dans lesdites zones de paroi (2) la surface extérieure (210) est formée de manière elliptique à partir du point central (C), dans lequel dans lesdites zones de paroi (2) la surface intérieure (200) est formée de manière elliptique à partir du point central (C); et **en ce que** les zones de paroi (20) ont une épaisseur de paroi (W20), laquelle épaisseur de paroi (W20) est essentiellement constante.

7. Capteur de force WIM (100) selon la revendication 6, **caractérisé en ce que** les zones de paroi (20) ont une épaisseur de paroi (W20); **en ce que** la zone de montage (25) a une épaisseur de paroi renforcée (W25) ; et **en ce que** l'épaisseur de paroi renforcée (W25) est supérieure à l'épaisseur de paroi (W20).

8. Capteur de force WIM (100) selon l'une quelconque des revendications 6 ou 7, **caractérisé en ce que** la zone de montage (25) s'étend sur la surface intérieure (200) entre deux points d'inflexion (P20); et **en ce que**, au niveau d'un point d'inflexion (P20), la zone de montage (25) se fond en continu dans une zone de paroi (20).

9. Capteur de force WIM (100) selon l'une quelconque des revendications 1 à 8, **caractérisé en ce que** le long de l'axe d'introduction de force (Y), la cavité (22) est fabriquée spécifiquement avec un surdimensionnement vertical par rapport à la taille du agencement de mesure piézoélectrique (5).

10. Capteur de force WIM (100) selon la revendication 9, **caractérisé en ce que** le long de l'axe d'introduction de force (Y), la cavité (22) est délimitée par des surfaces d'introduction de force internes (260); **en ce que** les surfaces d'introduction de force internes (260) ont une distance verticale (261) les unes des autres; **en ce que** l'agencement de mesure piézoélectrique (5) a une hauteur verticale (551) le long de l'axe d'introduction de force (Y); et **en ce qu'**une différence entre la distance verticale (261) et la hauteur verticale (551) est le surdimensionnement vertical.

**11.** Capteur de force WIM (100) selon la revendication 9, **caractérisé en ce que,** pour le montage du agencement de mesure piézoélectrique (5) dans la cavité (22), le demi-axe mineur (b) peut être élargi le long de l'axe d'introduction de force (Y) pour obtenir un demi-axe mineur élargi (b++), lequel élargissement est au moins aussi grand que le surdimensionnement vertical et les tolérances de fabrication de la pièce tubulaire (2) et du agencement de mesure piézoélectrique (5) le long de l'axe d'introduction de force (Y).

**12.** Capteur de force WIM (100) selon l'une quelconque des revendications 1 à 11, **caractérisé en ce que** l'agencement de mesure piézoélectrique (5) peut être monté dans la pièce tubulaire (2) ayant un demi-axe mineur élargi (b++).

**13.** Capteur de force WIM (100) selon la revendication 12, **caractérisé en ce que** le demi-axe mineur élargi (b++) avec l'agencement de mesure piézoélectrique (5) monté peut être déformé pour obtenir un demi-axe mineur résiduellement élargi (b+); dans lequel, le long de l'axe d'introduction de force (Y), ledit élargissement est exactement aussi grand que le surdimensionnement vertical et les tolérances de fabrication de la pièce tubulaire (2) et du agencement de mesure piézoélectrique (5) .

**14.** Capteur de force WIM (100) selon la revendication 13, **caractérisé en ce que,** en annulant une force de montage (M) agissant le long d'un axe d'introduction de force (Y), le demi-axe mineur élargi (b++) avec l'agencement de mesure piézoélectrique (5) monté peut être déformé pour obtenir le demi-axe mineur résiduellement élargi (b+); et **en ce que** ledit demi-axe mineur résiduellement élargi (b+) génère la précontrainte mécanique (V).

**15.** Profilé de boîtier (1) pour un capteur de force WIM (100) selon l'une quelconque des revendications 1 à 14, **caractérisé en ce que** le demi-axe majeur (a) est essentiellement 5% plus grand que le demi-axe mineur (b).

Fig. 1

5, 100

500

X

Y

K

50

51

551

50

XY

500

K

**Fig. 2**

Y

c

2'

X

M

c

C

y

b

a

x

**Fig. 6**

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0654654 A1
- CN 102928005 A1
- WO 8705773 A1